# DEMANDE DE BREVET EUROPEEN

(11) **EP 1 509 031 A1**
(43) Date de publication de la demande: **23.02.2005**
(21) Numéro de dépôt: 04019442.5
(22) Date de dépôt: 16.08.2004
(51) Int. Cl.: H04M 3/42

(54) **Système et procédé d'acheminement intelligent des appels téléphoniques**

(30) Priorité: 21.08.2003 FR 0310084
(71) Demandeur: FRANCE TELECOM, 75015 Paris (FR)
(72) Inventeur: Dutronc, Frédéric, 92370 Chaville (FR); Bonneau, Florent, 92190 Meudon (FR); Mouminoux, Pierre, 75011 Paris (FR)
(74) Mandataire: Jeune, Pascale

(57) **Abrégé**

La présente invention concerne un procédé d'acheminement intelligent des appels téléphoniques. Elle concerne aussi un système pour mettre en oeuvre le procédé de l'invention.

Le procédé d'acheminement intelligent des appels téléphoniques consiste dans une première étape de configuration à affecter un numéro d'identification à un utilisateur appelable sur au moins un réseau téléphonique, puis dans une seconde étape d'exploitation, à mettre en relation ce numéro d'identification unique avec une liste de numéros d'appel téléphonique, construite automatiquement et dynamiquement et correspondant aux différents terminaux téléphoniques auprès desquels l'utilisateur appelable est localisé.

## Description

La présente invention concerne un procédé d'acheminement intelligent des appels téléphoniques. Elle concerne aussi un système pour mettre en oeuvre le procédé de l'invention.

Il existe des situations dans lesquelles un individu peut se trouver dans l'un ou l'autre de plusieurs lieux équipés de ressources de connexion téléphonique. Or, un terminal téléphonique est connecté à un réseau téléphonique par un numéro d'appel unique. Les carnets d'adresse permettent en général de mémoriser sous quelque forme que ce soit un numéro d'appel téléphonique en relation avec un individu unique. Il en résulte que si l'individu appelé se trouve à un autre terminal téléphonique, le réseau téléphonique doit comporter une ressource permettant de transférer cet appel vers l'autre poste. Quand se multiplie le nombre de postes de travail où l'individu appelé peut se trouver, les carnets d'adresse de ses correspondants appelants deviennent inexploitables, et les systèmes de gestion des appels téléphoniques deviennent ingérables.

A défaut de connaître la localisation instantanée de l'utilisateur, les services de gestion téléphonique actuels proposent aussi des tentatives d'appels successifs vers les différents terminaux téléphoniques de l'utilisateur. Cette succession d'appels est faite de manière statique selon un paramétrage fixe, qui ne tient pas compte de la situation réelle de l'utilisateur.

Le problème avec les systèmes existants est qu'ils demandent toujours un important effort de paramétrage de la part des utilisateurs, afin d'indiquer au système le ou les téléphones sur lesquels ils sont susceptibles de recevoir des appels. L'aspect déclaratif est un frein à l'utilisation de tels systèmes même si ceux-ci peuvent à l'aide d'actions complexes et répétitives atteindre le même niveau de service. On ne peut plus parler de service intelligent, car c'est l'intelligence de l'utilisateur qui est sollicitée pour déclarer à tout moment sa nouvelle situation. En cas d'oubli de l'utilisateur pour faire correspondre sa situation avec celle connue du système, l'utilisateur perdra ses appels.

Les systèmes de l'état de la technique demandent en outre une interaction entre l'utilisateur et le système d'acheminement des appels entrants pour réaliser le service.

Un autre inconvénient des systèmes de l'état de la technique est aussi l'utilisation des ressources réseau. En effet, ces systèmes utilisent des opérations de renvoi d'appels téléphoniques, que vient positionner l'utilisateur, et qui peuvent être successifs, si l'utilisateur destinataire dispose de plusieurs terminaux téléphoniques appelables. L'appel va suivre toute la chaîne de ces renvois sans garantie de succès de l'appel, par exemple si l'utilisateur destinataire n'est pas présent ou s'il est en communication.

Enfin, les systèmes de transferts d'appels de l'état de la technique proposent des solutions que l'utilisateur doit juxtaposer manuellement pour couvrir le besoin complet. Or, ces systèmes sont non homogènes, complexes et pénibles à mettre en oeuvre par l'utilisateur et pas du tout intelligents.

C'est un objet de la présente invention d'apporter remède à ces inconvénients de l'état de la technique.

En effet, la présente invention concerne un procédé d'acheminement intelligent des appels téléphoniques caractérisé en ce qu'il consiste:
- dans une première étape de configuration, à affecter un numéro téléphonique personnel à un utilisateur appelable sur au moins un réseau téléphonique, ledit numéro téléphonique affecté étant associé à une pluralité de numéros téléphoniques affectés aux différents terminaux téléphoniques que possède l'utilisateur;
- dans une seconde étape d'exploitation, lors d'un appel téléphonique à destination dudit numéro de téléphone personnel affecté à l'utilisateur, à localiser l'utilisateur appelable, et à acheminer l'appel téléphonique vers au moins un des terminaux téléphoniques auprès desquels l'utilisateur appelable a été localisé.

Dans l'exemple illustré, le numéro téléphonique personnel affecté à l'utilisateur est unique. De préférence, le procédé met en relation ce numéro d'identification unique avec un ou plusieurs numéros d'appel téléphonique correspondant aux différents terminaux téléphoniques déterminés automatiquement et dynamiquement selon la localisation de l'utilisateur appelable, et enfin, à acheminer préférentiellement les appels téléphoniques auprès desquels l'utilisateur appelable a été localisé.

L'invention concerne aussi un système de gestion d'acheminement intelligent d'appels téléphoniques, caractérisé en ce qu'il comporte :
- un serveur de bases de données capable d'enregistrer une base de données incluant un numéro d'identification téléphonique affecté à un utilisateur, ledit numéro téléphonique affecté étant associé à une pluralité de numéros téléphoniques affectés aux différents terminaux téléphoniques que possède l'util isateu r;
- un système de localisation de l'utilisateur de façon à faire une correspondance, lors d'un appel associé au numéro affecté à un utilisateur, ledit numéro téléphonique affecté à l'utilisateur appelé avec ledit au moins un numéro téléphonique du terminal téléphonique localisé; et
- un système de communication des appels téléphoniques pour acheminer l'appel téléphonique vers au moins un des terminaux téléphoniques auprès desquels l'utilisateur appelable a été localisé.

De préférence, la base de données enregistrée dans le serveur de base de données est maintenue à jour.

L'invention concerne aussi un programme d'ordinateur apte à être mis en oeuvre sur un système d'acheminement d'appels téléphoniques, ledit programme comprenant des instructions de code qui, lorsque le programme est exécuté sur un dispositif d'acheminement des appels, réalisent les étapes suivantes:
- une étape de stockage pour enregistrer une base de données incluant un numéro d'identification téléphonique affecté à un utilisateur, ledit numéro téléphonique affecté étant associé à une pluralité de numéros téléphoniques affectés aux différents terminaux téléphoniques que possède l'utilisateur;
- une étape de correspondance apte à faire correspondre, lors d'un appel associé au numéro affecté à un utilisateur, ledit numéro téléphonique affecté à l'utilisateur appelé avec ledit au moins un numéro téléphonique du terminal téléphonique préalablement localisé;
- une étape d'acheminement apte à acheminer les appels téléphoniques pour acheminer l'appel entrant vers ledit poste téléphonique associé.

A la différence de l'état de la technique, la présente invention permet d'acheminer de manière intelligente et automatique les appels vers les utilisateurs. Il n'existe pas de liste de téléphones affectée à un utilisateur particulier. De préférence, un seul numéro téléphonique affecté suffit à la mise en oeuvre de l'invention; ainsi, l'invention permet de ne mémoriser qu'un seul numéro téléphonique, celui affecté à l'utilisateur lors de l'étape de stockage.

De préférence le système de localisation est instantanée de façon à mettre en relation instantanément, lors d'un appel téléphonique, un numéro téléphonique d'appel affecté à l'utilisateur avec le numéro téléphonique du terminal téléphonique associé à la localisation de l'utilisateur appelé.L

Dans l'exemple illustré, les terminaux téléphoniques peuvent être associés à des postes de travail (ou terminaux informatiques) en relation desquels l'utilisateur inscrit dans la base de données peut se trouver. Avantageusement, une étape de détection de l'activité sur un terminal informatique associé avec un terminal téléphonique particulier, et en que les appels sont acheminés vers les numéros téléphoniques des utilisateurs en fonction de l'activité informatique desdits utilisateurs.

L'invention permet aussi de séparer les informations statiques des bases de données : d'une part les utilisateurs et leurs numéros personnels uniques, et d'autre part la description du « périmètre matériel » du service avec les réseaux informatiques et téléphoniques. C'est le système de l'invention qui va construire dynamiquement un lien entre les deux bases de données. La présente invention permet de déterminer vers quel terminal téléphonique les appels vers un utilisateur doivent être acheminés, en fonction de l'activité de l'utilisateur, par exemple de son activité sur un terminal informatique associé avec un terminal téléphonique particulier.

A noter que les différents serveurs, bases de données, ainsi que le système de localisation peuvent indifféremment se trouver sur un même dispositif ou éclatés sur différents dispositifs.

D'autres caractéristiques et avantages de la présente invention seront mieux compris à l'aide de la description et des figures annexées parmi lesquelles :
- la figure 1 représente un ordinogramme du procédé de l'invention ;
- la figure 2 représente un mode de réalisation du système de l'invention ;
- la figure 3 représente un autre mode de réalisation du système de l'invention.

Dans le cadre de la présente invention, pour réaliser des services intelligents d'acheminement des appels téléphoniques, chaque utilisateur est initialement pourvu d'un numéro de téléphone utilisé pour joindre l'utilisateur indépendamment de sa localisation physique. De préférence, ce numéro téléphonique est unique et personnel, L'apport de la présente invention réside en ce qu'elle utilise les propriétés des connexions informatiques des utilisateurs pour déterminer le terminal téléphonique sur lequel acheminer les appels vers cet utilisateur. Dans le cadre de la présente invention, la disposition d'un moyen de localisation comme un moyen de détection de la présence de l'individu permet cet acheminement intelligent des appels téléphoniques. L'invention exploite donc d'abord une étape de localisation automatique de l'utilisateur appelable en relation avec un terminal téléphonique, fixe ou mobile.

Une application possible de l'invention permet son implémentation dans une entreprise dont les bureaux ne sont pas personnellement attribués aux employés. Chaque bureau comporte un poste ou terminal informatique préférentiellement connecté à un réseau local d'entreprise et/ou à un réseau externe comme le réseau Internet. Chaque bureau comporte aussi le cas échéant un ou plusieurs terminaux téléphoniques connectés à un réseau de téléphone qui peut être séparé, confondu ou combiné avec le réseau informatique local ou avec le réseau externe comme le réseau Internet. En exploitant l'invention, il est possible d'attribuer dynamiquement de tels bureaux ou postes de travail en fonction des besoins des utilisateurs dans l'entreprise. Par exemple, le seul fait que l'utilisateur ouvre une session de travail sur un terminal informatique permet à la présente invention d'acheminer les appels à destination de cet utilisateur vers le terminal téléphonique jouxtant cet ordinateur.

Une autre application possible de l'invention permet l'implémentation de la gestion du travail des travailleurs nomades, susceptibles de travailler aussi bien à domicile, que dans un bureau de passage, et qu'à leur bureau propre. Le système d'acheminement d'appels de l'invention comporte un moyen distant permettant au travailleur nomade de se connecter au réseau privé de son entreprise depuis son domicile, ce qui permet selon la présente invention d'acheminer tous les appels professionnels de cet utilisateur vers le terminal téléphonique de son domicile, sans aucune autre intervention de cet utilisateur.

Par exemple, lorsqu'un utilisateur nomade travaille à domicile, il doit indiquer au système d'acheminement d'appels qu'il est maintenant localisé à son domicile, afin que ledit système puisse acheminer les appels vers cet utilisateur sur le terminal téléphonique de son domicile. L'indication de cette localisation est effectuée de différentes façons. Le système d'acheminement d'appels comporte un moyen d'appel vers un serveur vocal interactif, un moyen d'appel vers une connexion à un site Internet, un moyen d'émission automatique de messages sur un réseau de téléphonie mobile comme des messages de type SMS, un moyen d'émission automatique de codes vers le système informatique de gestion du réseau téléphonique de l'entreprise PABX.

Avantageusement, il en résulte qu'un appel vers un tel numéro personnel peut être dirigé selon les circonstances détectées par le système d'acheminement d'appels : vers un terminal téléphonique professionnel, vers un terminal téléphonique privé, vers un terminal téléphonique mobile ou vers une messagerie vocale, en fonction de la localisation physique effective du destinataire au moment de l'appel.

Dans un mode particulier de réalisation, lorsque un utilisateur nomade travaille à domicile à l'aide d'une connexion de type ADSL, le système d'acheminement de l'invention comporte un moyen pour identifier le numéro téléphonique utilisé par la connexion ADSL et pour l'utiliser comme numéro téléphonique vers lequel le système d'acheminement pourra diriger les appels entrants dans le réseau téléphonique de l'entreprise vers ce numéro de connexion ADSL, particulièrement quand le système d'acheminement aura détecté une activité nomade en relation avec cette connexion ADSL.

Dans un mode particulier de réalisation, lorsque un utilisateur nomade travaille à domicile ne peut s'effectuer directement par les moyens directs du système d'acheminement, ce dernier comporte des moyens pour coopérer avec des moyens supplémentaires à la disposition du travailleur nomade pour préciser sa localisation. Parmi ces moyens se trouvent des moyens automatiques comme un moyen d'émission automatique de messages sur un réseau de téléphonie mobile ou fixe comme des messages de type SMS, un moyen d'émission automatique de codes vers le système informatique de gestion du réseau téléphonique de l'entreprise à laquelle adhère le travailleur nomade tel qu'un autocommutateur privé, et des moyens semi-automatiques comme un serveur vocal interactif activé lors de la première connexion du travailleur nomade à son système informatique et/ou à son système téléphonique, ou comme un accès à une interface Internet.

Dans un mode particulier de réalisation du procédé de l'invention, d'autres données sont prises en compte pour former les critères d'acheminement de l'appel, telles celles en relation avec l'emploi du temps de l'appelé, l'identité de l'appelant, ou même l'activité du destinataire sur son terminal informatique.

L'information de localisation d'un utilisateur n'est pas toujours une information qu'il est possible d'obtenir ou de vérifier. Ces éléments viennent compléter de manière efficace le système d'acheminement de l'invention pour déterminer la localisation des utilisateurs dans des situations complexes ou pauvres en information, par exemple sans connexion à un terminal informatique.

Un bénéfice de la présente invention pour les utilisateurs est de permettre l'acheminement des appels qui leur sont destinés sur le terminal téléphonique le plus approprié sans aucune intervention pour paramétrage de leur part. Il leur suffit de se connecter à un ordinateur pour que leurs appels soient acheminés automatiquement sur le terminal téléphonique jouxtant cet ordinateur. Cette invention peut être mise en oeuvre pour des appels arrivant pour un utilisateur "localisé".

Cette invention peut être mise en oeuvre pour générer des appels pour l'utilisateur à partir du téléphone où le système d'acheminement va le localiser automatiquement.

Dans un mode particulier de réalisation, un appel téléphonique est généré automatiquement par un automate d'acheminement d'appel du type CTI distant. L'automate appelant est en relation avec une application exécutée sur le terminal informatique de l'utilisateur appelable. L'utilisateur appelable a, par exemple, validé sur le terminal informatique auquel est associé un terminal téléphonique un lien hypertexte qui réfère à une adresse Internet contrôlée par l'automate d'acheminement d'appels. Par la validation du lien, l'utilisateur appelable est localisé par l'automate d'acheminement d'appels. En lisant les données personnels associées à l'application en cours d'exécution sur le terminal informatique connecté par Internet à l'automate d'acheminement d'appels, ce dernier détermine alors le numéro d'appel de l'utilisateur et place une séquence de progression d'appel à son adresse par exemple avec un service de type « click to dial ».

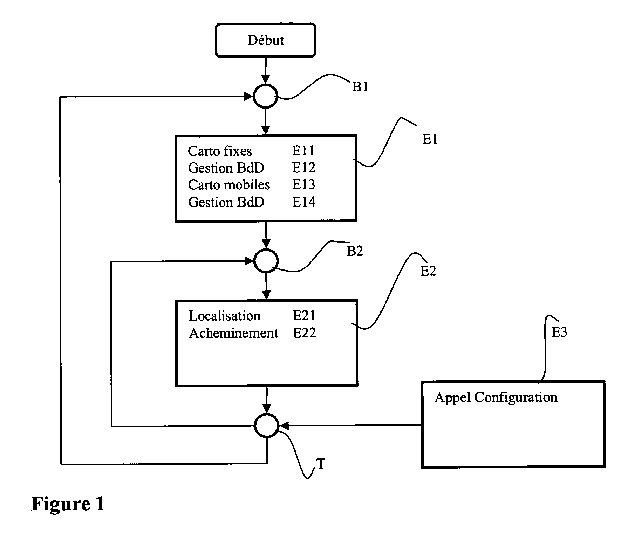

A la figure 1, on a représenté un ordinogramme d'un mode de réalisation du procédé de l'invention. Dans une première étape E1, le procédé de l'invention consiste à cartographier les réseaux téléphonique et informatique et à effectuer une configuration des systèmes informatique et téléphonique sur lesquels les utilisateurs peuvent être appelés.

On notera que la configuration de l'étape E1 consiste à effectuer deux configurations distinctes : d'un côté, les utilisateurs et leur numéro personnel unique et de l'autre côté les systèmes téléphonique et informatique sur lesquels les utilisateurs sont susceptibles de se trouver et être appelés. La configuration des réseaux téléphonique et informatique est statique et indépendante des utilisateurs, mais peut être modifiée selon l'évolution des réseaux.

Puis, dans une étape E2 d'exploitation des appels téléphoniques entrant, le procédé de l'invention consiste à effectuer, lors d'une sous étape E21, une localisation de chaque utilisateur inscrit lors de l'étape E1 puis, lors d'une sous étape E22, à effectuer l'acheminement des appels entrants sur les réseaux téléphoniques gérés vers les terminaux téléphoniques les mieux appropriés.

Dans l'exemple de réalisation, la boucle de configuration est initialisée à l'état B1 et peut être relancée à chaque test T de fin de boucle. Cette opération de reconfiguration peut être, par exemple, relancée lors d'une étape de requête E3 de configuration. Le test T ainsi que l'une de ces conditions d'évaluation affectée par l'étape E3 est à considérer de manière décorrélée des traitements de localisation et d'acheminement.

Dans un environnement de travail, à un terminal informatique fixe (« desktop computer ») est généralement associé un terminal téléphonique fixe. Si un utilisateur est actif sur ce terminal informatique, il est alors joignable sur le terminal téléphonique adjacent ou un des terminaux téléphoniques adjacents s'il y en a plusieurs. Un mécanisme décrit ci-dessous illustrera une façon de sélectionner un terminal téléphonique parmi "n" terminal téléphonque adjacent ( "n" est le nombre de terminal adjacent). On dit que l'utilisateur est localisé sur le terminal téléphonique en question. De tels terminaux fixes peuvent être utilisés par différents utilisateurs et ne sont pas nécessairement personnels. Ce sont par exemple des ordinateurs mis à disposition dans des bureaux de passage. En utilisant une procédure classique d'authentification sur le terminal informatique, le système de l'invention permet d'associer l'utilisateur avec ce terminal informatique, puis ensuite avec le terminal téléphonique adjacent.

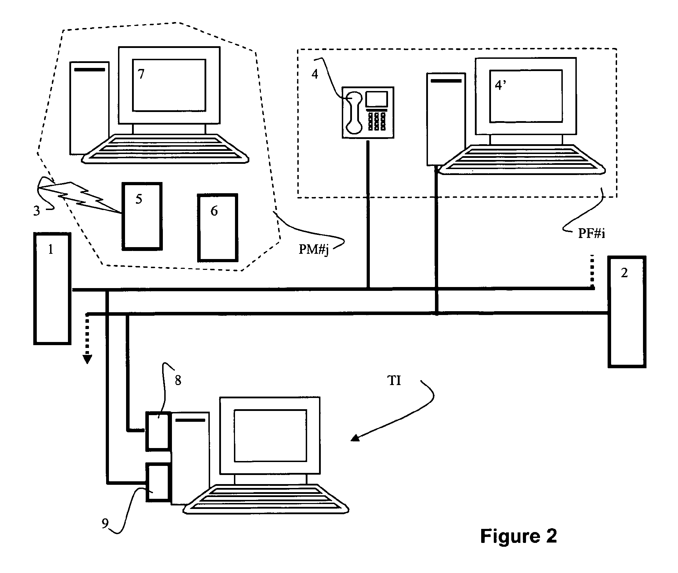

A la figure 2, on a représenté un mode de réalisation d'un système mettant en oeuvre le procédé de l'invention. Un réseau téléphonique fixe est connecté dans les locaux d'une entreprise par l'intermédiaire d'un autocommutateur 1. Un réseau local informatique est connecté dans les locaux de l'entreprise par l'intermédiaire d'un serveur 2. Une pluralité de postes de travail PF#i comprenant chacun un terminal téléphonique 4 et un terminal informatique 4' sont connectés, le terminal téléphonique par le branchement local à l'autocommutateur 1 et le terminal informatique 4' par le branchement au réseau local d'entreprise vers le serveur 2. Une pluralité de postes de travail mobile PM#j comprenant chacun un terminal informatique 7, un assistant personnel de données 6 et un terminal mobile 5 est prévue. Le terminal mobile 5 est relié de manière connue au réseau de téléphonie mobile 3 tandis que le terminal informatique 7 et/ou l'assistant personnel de données peuvent être reliés au réseau local d'entreprise par une connexion Internet ou une relation de type « peer to peer ». Les postes de travail mobile PM#j peuvent se trouver ou non dans les locaux de l'entreprise.

Enfin un terminal informatique TI comportant le cas échant un système de connexion 8 au réseau local d'entreprise pour atteindre les terminaux informatiques des postes de travail fixes TF#i et/ou au réseau Internet pour atteindre aussi les terminaux informatiques des postes de travail mobiles TM#j et comportant aussi un boîtier de connexion 9 au réseau de téléphonique fixe pour exécuter, par exemple, des fonctions de genre CTI est disposé en relation avec les dits réseaux.

Dans le cas d'un terminal informatique portable, l'association avec un terminal téléphonique est aussi possible, par exemple :
- Soit au moyen d'un système de détection dynamique de l'environnement (par exemple, selon un canal de type Blue Tooth™), pour déterminer le téléphone le plus proche, le plus pertinent ;
- Soit par association avec un téléphone mobile de l'utilisateur.

L'utilisateur peut être présent sur plusieurs postes de travail ou plusieurs terminaux téléphoniques, comme par exemple un terminal de téléphonie mobile et un terminal téléphonique fixe. Dans ce cas, le système d'acheminement des appels effectue de manière séquentielle selon un mécanisme prédéterminé de priorités une séquence d'appels vers ces différents terminaux jusqu'à ce que l'un d'eux répondent favorablement.

Dans le cas d'un acheminement séquentiel, le système doit définir l'ordre d'appel des terminaux. Cet ordre peut être défini en fonction de plusieurs critères :
- la détection d'activité sur le poste informatique associé au terminal téléphonique, détection évoquée précédemment ;
- les types des terminaux choisis dans une liste prédéterminée comme la liste LTC = {fixe, prioritaire, sur mobile, ...}.

On vient de présenter un mode de réalisation de l'invention dans lequel le choix d'acheminement est du genre séquentiel. Un acheminement simultané est aussi réalisé dans un autre mode de réalisation de l'invention.

Dans notre exemple de réalisation, le procédé de la présente invention comporte séparément ou en combinaison les opérations ou étapes suivantes :
1. Cartographier dans une sous étape E11 de l'étape E1 de configuration (voir figure 1) les associations entre terminaux informatiques fixes et terminaux téléphoniques fixes, puis stocker ces associations dans une base de données lors d'une sous étape E12 de l'étape E1 de configuration (voir figure 1).
2. Définir les utilisateurs appelables et leur numéro personnel unique et enregistrer ces informations dans une base de données.
3. Définir les terminaux mobiles téléphoniques des utilisateurs lors d'une sous étape E13 de l'étape E1 de configuration (voir figure 1) pour leurs connexions sur des terminaux portables et mobiles, puis stocker ces informations dans une base de données lors d'une sous étape E14 de l'étape E1 de configuration (voir figure 1).
4. Surveiller les connexions sur les terminaux informatiques et l'activité des utilisateurs authentifiés sur ces terminaux informatiques. Une telle surveillance peut être réalisée de plusieurs manières : surveillance des sessions informatiques, surveillance de l'activité réelle des utilisateurs (comptage du nombre de frappes au clavier par périodes de temps, détection des dates des mouvements d'un dispositif de pointage comme une souris), ou encore exécution d'un applicatif dédié.
5. Acheminer les appels reçus pour des numéros personnels vers les numéros téléphoniques où les utilisateurs possédant ces numéros personnels ont été localisés, de préférence en fonction de l'activité informatique desdits utilisateurs.

Le système de la présente invention est ainsi constitué de deux sous-systèmes :
- un premier sous-système est chargé de la collecte des informations pour déterminer la localisation intelligente et automatique des utilisateurs ;
- un second sous-système utilise l'information de localisation intelligente et automatique des utilisateurs pour assurer un service de mise en relation, optimisé et efficace.

La présente invention peut être associée à d'autres systèmes comme sources d'informations et inclure d'autres paramètres dans les critères de traitement d'appel :
- localisation selon les informations issues de l'agenda de l'utilisateur ;
- acheminement vers tel ou tel terminal ou messagerie selon l'identité de l'appelant ;
- prise en compte de la disponibilité instantanée exprimée par l'utilisateur.

Ces éléments viennent alors compléter l'intelligence du système pour correspondre à un choix plus fin de l'utilisateur mais tout en utilisant des informations non renseignées à des fins de paramétrage direct de l'invention.

Dans un mode de réalisation, le système d'acheminement comporte aussi un moyen pour enregistrer puis exploiter des paramètres par défaut permettant d'acheminer l'appel en l'absence d'activité informatique détectée : appel vers un terminal téléphonique par défaut, ou vers un téléphone mobile.

Dans un mode de réalisation, le système d'acheminement comporte aussi un moyen pour informer l'utilisateur de sa localisation téléphonique notamment en lui signalant sur un moyen de signalisation le téléphone sur lequel ses appels sont acheminés ainsi qu'un moyen permettant également à l'utilisateur de modifier celle-ci si la localisation téléphonique déterminée automatiquement par le système ne lui convient pas.

Dans un mode de réalisation, le système de la présente invention met en oeuvre les éléments suivants. A chaque utilisateur est attribué un numéro personnel, de préférence unique, utilisé par ses correspondants pour le joindre. Ce numéro ne correspond à aucun téléphone en particulier mais est affecté à un utilisateur. L'exemple de réalisation du système d'acheminement d'appels de l'invention comporte :
- un autocommutateur d'entreprise (PABX) avec son propre système informatique assurant les fonctions de gestion téléphonique classiques ;
- un serveur de Couplage Téléphonie Informatique (CTI) capable de commander l'autocommutateur d'entreprise et de réaliser des opérations téléphoniques complémentaires telles que des opérations de mises en garde, des opérations de transferts d'appels, ...
- un serveur d'application mettant en oeuvre la logique de service pour déterminer comment acheminer les appels ;
- un serveur de présence chargé de collecter les informations de connexion et d'activité des utilisateurs en provenance des terminaux informatiques gérés par le système, et chargé de maintenir à jour l'état de présence et de localisation des utilisateurs ;
- une base de données chargée de conserver les associations entre terminaux informatiques et terminaux téléphoniques (et pouvant également conserver d'autres données telles que les préférences utilisateurs, les téléphones par défaut de l'utilisateur,...).

Chaque appel entrant vers un utilisateur enregistré dans la base de données du système d'acheminement de l'invention est dirigé par l'autocommutateur PABX vers le serveur CTI, qui informe par un protocole adéquat le serveur d'application de l'arrivée d'un appel. Les paramètres transmis incluent au minimum le numéro personnel appelé et le numéro de l'appelant s'il est disponible.

Le serveur d'application procède alors, dans notre exemple, aux opérations suivantes:
1. Demande au serveur CTI de mettre l'appel en attente ;
2. Demande par un protocole adéquat au serveur de présence de l'information de localisation téléphonique courante de l'utilisateur associé au numéro personnel appelé.
3. Le serveur de présence vérifie que l'utilisateur en question est actuellement présent et actif sur un ordinateur, et récupère dans la base de données le numéro de téléphone associé à l'ordinateur de l'utilisateur. Si l'utilisateur n'est détecté présent sur aucune machine, le serveur de présence détermine le téléphone par défaut de cet utilisateur (téléphone mobile, téléphone de bureau usuel,...). Le serveur de présence renvoie enfin au serveur d'application la localisation téléphonique courante de l'utilisateur
4. Demande au serveur CTI de transférer l'appel entrant vers le téléphone où l'utilisateur est localisé.

Ce serveur d'application peut également mettre en oeuvre d'autres critères d'acheminement de l'appel tels que l'agenda de l'utilisateur ou l'identité de l'appelant. De tels services sont déjà connus et mis en oeuvre et ne constituent pas l'objet de la présente invention. Mais leur prise en compte et l'exploitation des données qui s'y trouvent dans le cadre du procédé d'acheminement intelligent complète et valorise de tels services existants.

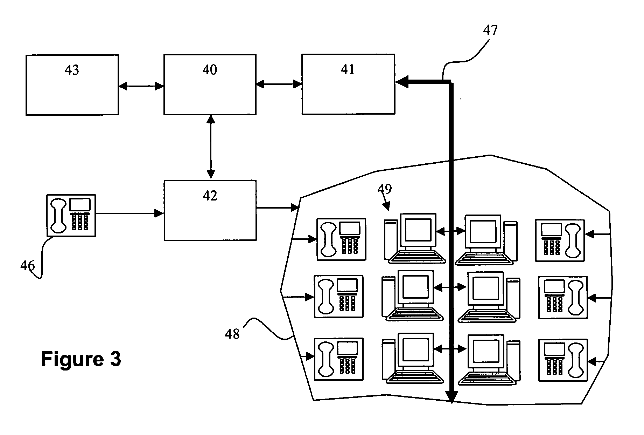

La figure 3 est une vue schématique incluant les différents éléments qui ont servi à l'illustration de l'invention, à savoir
1. Un serveur de bases de données 43 dédié à stocker :
   a. La liste des terminaux informatiques gérés par le système ;
   b. Pour chacun de ces terminaux, s'il s'agit d'un terminal fixe ou mobile ;
   c. Pour chaque terminal informatique fixe, l'adresse du terminal téléphonique fixe adjacent s'il en existe un, ou des terminaux téléphoniques fixes adjacents s'il en existe plusieurs ;
   d. La liste des utilisateurs du système ;
   e. Pour chaque utilisateur, les adresses de leurs terminaux téléphoniques mobiles personnels ;
   f. Pour chaque utilisateur, un numéro téléphonique personnel de préférence unique.
   g. Pour chacun de ces terminaux téléphoniques mobiles, s'il est dédié à un usage personnel ou professionnel, ou autre;
   h. Pour chaque utilisateur, une adresse d'un terminal téléphonique privilégié pour cet utilisateur, et sur lequel les appels à destination de cet utilisateur seront acheminés en l'absence d'information fiable concernant la présence de cet utilisateur.
2. Un serveur de présence 41 chargé de surveiller l'activité des utilisateurs sur les terminaux informatiques gérés par le système et de maintenir à jour l'état de présence de chaque utilisateur. Il est connecté au réseau informatique 47 de l'entreprise.
3. Un serveur de contrôle d'appels 42 prenant en charge tous les appels téléphoniques à destination des numéros personnels des utilisateurs. Sur réception d'un appel entrant, il prévient un serveur d'applications 40. Sur ordre du serveur d'application 40, ce serveur de contrôle d'appels 42 comporte des moyens pour mettre en attente les appels entrants comme ceux provenant d'un terminal téléphonique appelant 46, des moyens pour lancer un appel vers le terminal téléphonique destinataire et finalement des moyens pour abouter les deux appels.
4. Un serveur d'applications 40 comportant des moyens pour réaliser la logique de services et des moyens pour gérer l'acheminement des appels entrants. Il utilise les données fournies par la base de données 43 et les données de détection de présence fournies par le serveur de présence 41, ces deux groupes de données étant traitées par des moyens pour déterminer sur quel terminal téléphonique l'appel doit être acheminé. Le terminal téléphonique peut le cas échéant être constitué par un dispositif de messagerie vocale ou un autre dispositif de ce genre. Le serveur d'applications 40 peut éventuellement comporter aussi des moyens pour mettre en oeuvre des logiques de services plus élaborées tenant compte en sus, par exemple, du planning du destinataire récupéré via une connexion à un outil de gestion d'agenda.

La présente invention peut également mettre en oeuvre un serveur vocal, sur ordre du serveur d'application et être chargé de diffuser des annonces vocales.

## Revendications

1. Procédé d'acheminement intelligent des appels téléphoniques **caractérisé en ce qu'**il consiste:
- dans une première étape de configuration (E1), à affecter un numéro téléphonique personnel à un utilisateur appelable sur au moins un réseau téléphonique, ledit numéro téléphonique affecté étant associé à une pluralité de numéros téléphoniques affectés aux différents terminaux téléphoniques que possède l'utilisateur;
- dans une seconde étape d'exploitation (E2), lors d'un appel téléphonique à destination dudit numéro de téléphone personnel affecté à l'utilisateur, à localiser l'utilisateur appelable, et à acheminer l'appel téléphonique vers au moins un des terminaux téléphoniques auprès desquels l'utilisateur appelable a été localisé.

2. Procédé selon la revendication 1, **caractérisé en ce que** ledit numéro téléphonique personnel affecté à l'utilisateur est unique.

3. Procédé selon la revendication 1, **caractérisé en ce qu'**il comporte une étape de détection de l'activité sur un terminal informatique associé avec un terminal téléphonique particulier, et en que les appels sont acheminés vers les numéros personnels des utilisateurs en fonction de l'activité informatique desdits utilisateurs.

4. Procédé selon l'une des revendications précédentes, **caractérisé en ce que** l'étape d'exploitation comporte une étape d'acheminement séquentiel avec priorisation par l'utilisateur ou le système des terminaux selon leur type : fixe, mobile, ... ou d'acheminement simultané avec interruption des autres appels dès le succès d'un premier appel.

5. Procédé selon la revendication 3, **caractérisé en ce qu'**il comporte l'étape préalable de
• Cartographier dans une sous étape (E11) de l'étape (E1) de configuration les associations entre terminaux informatiques et terminaux téléphoniques, puis stocker ces associations dans une base de données lors d'une sous étape (E12) de l'étape (E1 ) de configuration ;

6. Système de gestion d'acheminement intelligent d'appels téléphoniques, **caractérisé en ce qu'**il comporte :
- un serveur de bases de données capable d'enregistrer une base de données incluant un numéro d'identification téléphonique affecté à un utilisateur, ledit numéro téléphonique affecté étant associé à une pluralité de numéros téléphoniques affectés aux différents terminaux téléphoniques que possède l'utilisateur;
- un système de localisation de l'utilisateur de façon à faire une correspondance, lors d'un appel associé au numéro affecté à un utilisateur,ledit numéro téléphoniqueaffecté à l'utilisateur appelé avec ledit au moins un numéro téléphonique du terminal téléphonique localisé;et
- un système de communication des appels téléphoniques pour acheminer l'appel téléphonique vers au moins un des terminaux téléphoniques auprès desquels l'utilisateur appelable a été localisé.

7. Système selon la revendication 6, **caractérisé en ce** ledit numéro téléphonique personnel affecté à l'utilisateur est unique.

8. Système selon la revendication 6, **caractérisé en ce qu'**il comprend des moyens de détection de l'activité d'un utilisateur sur un terminal informatique associé avec un terminal téléphonique particulier, les appels étant acheminés vers les numéros personnels des utilisateurs en fonction de l'activité informatique desdits utilisateurs.

9. Système selon la revendication 8, **caractérisé en ce qu'**il comprend des moyens aptes à détecter l'ouverture d'une session de travail sur le terminal informatique associé avec ledit terminal téléphonique particulier, cette ouverture de session correspondant à une activité d'un utilisateur, de sorte que soient acheminés les appels à destination de cet utilisateur vers le terminal téléphonique jouxtant ce terminal informatique.

10. Système selon la revendication 8, **caractérisé en ce qu'**il comprend un serveur de présence chargé de collecter les informations de connexion et d'activité des utilisateurs en provenance des terminaux informatiques gérés par le système, et chargé de maintenir à jour l'état de présence et de localisation des utilisateurs ;

11. Système selon la revendication 6 ou 8, **caractérisé en ce qu'**il comporte aussi un moyen pour informer l'utilisateur de sa localisation téléphonique notamment en lui signalant sur un moyen de signalisation le téléphone sur lequel ses appels sont acheminés ainsi qu'un moyen permettant également à l'utilisateur de modifier celle-ci si la localisation téléphonique déterminée automatiquement par le système ne lui convient pas.

12. Programme d'ordinateur apte à être mis en oeuvre sur un système d'acheminement d'appels téléphoniques, ledit programme comprenant des instructions de code qui, lorsque le programme est exécuté sur un dispositif d'acheminement des appels, réalisent les étapes suivantes:
- une étape d'enregistrement apte à enregistrer une base de données incluant un numéro d'identification téléphonique affecté à un utilisateur, ledit numéro téléphonique affecté étant associé à une pluralité de numéros téléphoniques affectés aux différents terminaux téléphoniques que possède l'utilisateur;
- une étape de correspondance apte à faire correspondre, lors d'un appel associé au numéro affecté à un utilisateur, ledit numéro téléphonique affecté à l'utilisateur appelé avec ledit au moins un numéro téléphonique du terminal téléphonique préalablement localisé;
- une étape d'acheminement apte à acheminer les appels téléphoniques vers au moins un des terminaux téléphoniques auprès desquels l'utilisateur appelable a été localisé.
